# EUROPÄISCHE PATENTSCHRIFT

(11) **EP 3 473 853 B1**
(45) Veröffentlichungstag und Bekanntmachung des Hinweises auf die Patenterteilung: **15.05.2024**
(21) Anmeldenummer: 18201876.2
(22) Anmeldetag: 22.10.2018
(51) Int. Cl.: F03D 7/04

(54) **STEUERUNGSSYSTEM UND VERFAHREN ZUM BETREIBEN MEHRERER WINDENERGIEANLAGEN**
CONTROL SYSTEM AND METHOD FOR OPERATING MULTIPLE WIND ENERGY PLANTS
SYSTÈME DE COMMANDE ET PROCÉDÉ DE FONCTIONNEMENT D'UNE PLURALITÉ D'ÉOLIENNES

(30) Priorität: 23.10.2017 DE 102017009838
(43) Veröffentlichungstag der Anmeldung: 24.04.2019
(73) Patentinhaber: Siemens Gamesa Renewable Energy Service GmbH, 20097 Hamburg (DE)
(72) Erfinder: Geisler, Jens, 24768 Rendsburg (DE); Schmuck, Jesse Ben Benjamin, 24943 Flensburg (DE)
(74) Vertreter: Glawe, Delfs, Moll

(56) Entgegenhaltungen:
- EP-A2- 1 790 851
- EP-A2- 2 636 895
- CN-A- 106 779 201
- US-A1- 2007 067 067
- US-A1- 2013 300 115
- US-A1- 2016 146 190

## Beschreibung

Die Erfindung betrifft ein Verfahren zum Betreiben einer ersten Windenergieanlage und einer zweiten Windenergieanlage, wobei die zweite Windenergieanlage im Nachlauf der ersten Windenergieanlage angeordnet ist. Die Erfindung betrifft außerdem ein Steuerungssystem für Windenergieanlagen.

Werden zwei Windenergieanlagen benachbart zueinander betrieben, so stellt sich das Problem, dass im Nachlauf der ersten Windenergieanlage ungleichmäßige Windverhältnisse herrschen können, durch die die zweite Windenergieanlage einer erhöhten Belastung ausgesetzt sein kann, EP 2 063 108 A2, EP 1 790 851 A2, WO 2015/039 665 A1, WO 2011/160 634 A1.

Die Druckschrift US 2007/0067067 A1 betrifft ein Verfahren zur Anpassung einer Windenergieanlage an gegebene Windverhältnisse, bei dem der Einfallswinkel des Windes an den jeweiligen Rotorblättern eingestellt werden kann.

Der Erfindung liegt die Aufgabe zugrunde, ein Steuerungssystem und ein Verfahren zum Betreiben mehrerer Windenergieanlagen vorzustellen, sodass die Belastung der im Nachlauf einer ersten Windenergieanlage angeordneten zweiten Windenergieanlage vermindert wird. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren wird ein Prädiktionsmodell mit einem aktuellen Windwert der ersten Windenergieanlage gespeist, um einen zukünftigen Zeitpunkt vorherzusagen, zu dem die mit dem Rotor der zweiten Windenergieanlage überstrichene Fläche durch den Nachlauf der ersten Windenergieanlage teilweise überdeckt wird. Die zweite Windenergieanlage reagiert auf die Vorhersage, indem ein Steuersignal erzeugt wird, um den Pitchwinkel eines Rotorblatts der zweiten Windenergieanlage relativ zu dem Pitchwinkel eines anderen Rotorblatts der zweiten Windenergieanlage zu verändern. In einer Ausführungsform wird das Steuersignal vor dem zukünftigen Zeitpunkt erzeugt.

Trifft der Nachlauf einer ersten Windenergieanlage den Rotor einer zweiten Windenergieanlage nur teilweise, so wird der Rotor der zweiten Windenergieanlage asymmetrisch belastet. Die Erfindung basiert auf dem Gedanken, der asymmetrischen Belastung des Rotors entgegenzuwirken, indem eines der Rotorblätter relativ zu den anderen Rotorblättern verstellt wird, wobei die Verstellung präventiv erfolgt, also zu einem Zeitpunkt bevor die erhöhte Belastung auf den Rotor wirkt (Vorsteuerung).

Das Prädiktionsmodell kann von der Annahme ausgehen, dass der Nachlauf sich in Verlängerung der Rotorachse der ersten Windenergieanlage erstreckt. Die mit dem Rotor der ersten Windenergieanlage überstrichene Fläche kann als Ausgangspunkt für den Querschnitt des Nachlaufs angenommen werden. Das Prädiktionsmodell kann von der Annahme ausgehen, dass der Nachlauf sich ausgehend von diesem Ausgangspunkt mit zylindrischem Querschnitt entlang der Richtung der Rotorachse fortpflanzt. Das Prädiktionsmodell kann von der Annahme ausgehen, dass der Nachlauf sich mit zunehmendem Abstand von dem Rotor der ersten Windenergieanlage in radialer Richtung aufweitet. Das Prädiktionsmodell kann von der Annahme ausgehen, dass die Windgeschwindigkeit im Nachlauf vermindert ist verglichen mit einem Windfeld, das nicht durch die erste Windenergieanlage gestört ist. Das Prädiktionsmodell kann von der Annahme ausgehen, dass die Windgeschwindigkeit im Nachlauf eine radiale Verteilung aufweist, gemäß der die Windgeschwindigkeit im Zentrum des Nachlaufs geringer ist als in der Peripherie des Nachlaufs. Das Prädiktionsmodell kann von der Annahme ausgehen, dass die Turbulenzintensität im Nachlauf erhöht ist verglichen mit einem Windfeld, das nicht durch die erste Windenergieanlage gestört ist.

Das Prädiktionsmodell kann von der Annahme ausgehen, dass der Nachlauf sich ausgehend von der ersten Windenergieanlage mit einer Geschwindigkeit fortpflanzt, die der Windgeschwindigkeit entspricht. Das Prädiktionsmodell kann mit einem Windgeschwindigkeitswert gespeist werden, aus dem die Fortpflanzungsgeschwindigkeit des Nachlaufs ermittelt wird.

Das Prädiktionsmodell kann von der Annahme ausgehen, dass der Nachlauf sich in Windrichtung fortpflanzt. Das Prädiktionsmodell kann mit einem Windrichtungswert gespeist werden, aus dem die Fortpflanzungsrichtung des Nachlaufs ermittelt wird.

Der aktuelle Windgeschwindigkeitswert und/oder der aktuelle Windrichtungswert können gemessene Werte sein. Ein gemessener Wert kann mit einem Anemometer gewonnen werden. Das Anemometer kann beispielsweise auf der Gondel einer Windenergieanlage angeordnet sein.

Möglich ist auch, dass der aktuelle Windgeschwindigkeitswert und/oder der aktuelle Windrichtungswert ein geschätzter Wert ist. In vielen Fällen haben auf Basis von gesichert vorliegenden Parametern geschätzte Werte eine erhöhte Zuverlässigkeit verglichen mit gemessenen Werten. Für eine erhöhte Zuverlässigkeit ist es von Vorteil, wenn die Schätzwerte aus dem auf den gesamten Rotor wirkenden Luftmassenstrom abgeleitet werden. Im Vergleich zu einem auf der Windenergieanlage angeordneten Anemometer steht damit eine wesentlich größere Messfläche zur Verfügung. Insbesondere können die Schätzwerte aus Betriebsparametern der Windenergieanlage abgeleitet werden, die so ausgewählt sind, dass es eine Abhängigkeit zwischen den Betriebsparametern und dem auf den Rotor wirkenden Luftmassenstrom gibt. Ändert sich also der auf den Rotor wirkende Luftmassenstrom, so ergibt sich eine davon abhängige Änderung der Betriebsparameter. Als Betriebsparameter einer Windenergieanlage, die bei der Ermittlung eines Windschätzwerts berücksichtigt werden können, kommen beispielsweise in Betracht die Drehzahl des Rotors, der Pitchwinkel eines oder mehrerer Rotorblätter, das Drehmoment des Generators, eine Neigung des Turms und/oder die Verformung eines Rotorblatts. In die Ermittlung eines Windschätzwerts kann insbesondere eine Änderung einer dieser Größen einfließen. Bei der Ermittlung der Schätzwerte können mehrere dieser Betriebsparameter berücksichtigt werden, insbesondere mindestens drei dieser Betriebsparameter. Des weiteren kann vorteilhaft eine geschätzte oder aufgrund von Messdaten ermittelte Luftdichte berücksichtigt werden.

Der aktuelle Windgeschwindigkeitswert und/oder der aktuelle Windrichtungswert können bei der ersten Windenergieanlage gewonnen werden. Damit kann das Prädiktionsmodell von der Annahme ausgehen, dass der Nachlauf sich mit der Windrichtung fortsetzt, die auf die erste Windenergieanlage wirkt.

Der aktuelle Windgeschwindigkeitswert und/oder der aktuelle Windrichtungswert können bei der zweiten Windenergieanlage gewonnen werden. Damit kann das Prädiktionsmodell von der Annahme ausgehen, dass der Nachlauf der ersten Windenergieanlage sich gemäß der Windrichtung bei der zweiten Windenergieanlage fortpflanzt.

Das Prädiktionsmodell kann so ausgelegt sein, dass bei der Prädiktion der Fortpflanzungsrichtung des Nachlaufs sowohl ein aktueller Windrichtungswert von der ersten Windenergieanlage als auch ein aktueller Windrichtungswert von der zweiten Windenergieanlage berücksichtigt wird. Beispielsweise kann eine zwischen den beiden Windrichtungen liegende Fortpflanzungsrichtung des Nachlaufs angenommen werden, wenn der aktuelle Windrichtungswert der ersten Windenergieanlage und der aktuelle Windrichtungswert der zweiten Windenergieanlage voneinander abweichen.

Das Prädiktionsmodell kann so ausgelegt sein, dass bei der Prädiktion der Fortpflanzungsgeschwindigkeit des Nachlaufs sowohl Windgeschwindigkeitswerte von der ersten Windenergieanlage als auch Windgeschwindigkeitswerte von der zweiten Windenergieanlage berücksichtigt werden. Beispielsweise kann eine zwischen den beiden Windgeschwindigkeiten liegende Fortpflanzungsgeschwindigkeit des Nachlaufs angenommen werden, wenn die Windrichtungswerte der ersten Windenergieanlage und der zweiten Windenergieanlage voneinander abweichen.

Hat das Prädiktionsmodell eine Fortpflanzungsgeschwindigkeit und eine Fortpflanzungsrichtung für den Nachlauf geschätzt, so kann aus der relativen Position der ersten Windenergieanlage und der zweiten Windenergieanlage zueinander vorhergesagt werden, zu welchem zukünftigen Zeitpunkt die zweite Windenergieanlage einem bestimmten Einfluss des Nachlaufs der ersten Windenergieanlage ausgesetzt ist.

Die geographischen Positionen der ersten Windenergieanlage und der zweiten Windenergieanlage können in einem Koordinatensystem dargestellt werden. Wird der vorhergesagte Nachlauf in das Koordinatensystem abgebildet, so kann der Grad der Überdeckung zwischen dem Nachlauf und dem Rotor der zweiten Windenergieanlage ermittelt werden. Insbesondere kann der entlang einer Achse des Nachlaufs gemessene axiale Abstand zwischen der ersten Windenergieanlage und der zweiten Windenergieanlage ermittelt werden. Außerdem kann ein radialer Abstand zwischen einer Achse des Nachlaufs und der Achse der zweiten Windenergieanlage ermittelt werden. Aus dem radialen Abstand ergibt sich der Grad der Überdeckung zwischen dem Nachlauf und der von dem Rotor der zweiten Windenergieanlage überstrichenen Fläche.

Das Nachlaufmodell kann ein Modul zur Vorhersage der Turbulenzintensität umfassen. Dazu kann ein aktueller Wert der Turbulenzintensität bei der ersten Windenergieanlage gewonnen werden. Die Fortpflanzung der Turbulenzintensität kann mit dem Prädiktionsmodell geschätzt werden und daraus eine Vorhersage für die Turbulenzintensität zu einem zukünftigen Zeitpunkt bei der zweiten Windenergieanlage abgeleitet werden. Dabei kann in dem Prädiktionsmodell berücksichtigt werden, dass die Turbulenzintensität im Nachlauf allgemein höher ist als in einem ungestörten Windfeld. Der aktuelle Wert der Turbulenzintensität bei der ersten Windenergieanlage kann beispielsweise aus einer Standardabweichung der Leistung der ersten Windenergieanlage abgeleitet werden.

Bei einer Änderung der aktuellen Windrichtung im Bereich der ersten Windenergieanlage kann das Prädiktionsmodell in einer einfachen Variante so verfahren, dass die Änderung der Windrichtung direkt auf den Nachlauf übertragen wird. Dies bedeutet, dass der vorhergesagte Nachlauf seine Richtung gleichzeitig mit der Windrichtung ändert. Die Geschwindigkeit, mit der der Nachlauf sich in der neuen Richtung bewegt, kann aus der aktuellen Windgeschwindigkeit abgeleitet werden. Anhand des axialen Abstands zwischen der ersten und zweiten Windenergieanlage kann vorhergesagt werden, nach welcher Verzögerungszeit der Nachlauf sich in der neuen Richtung bis zu der zweiten Windenergieanlage fortgepflanzt hat. Die Summe aus dem aktuellen Zeitpunkt und der Verzögerungszeit ergibt den zukünftigen Zeitpunkt, für den die Vorhersage gültig ist.

Untersuchungen haben gezeigt, dass Änderungen der Windrichtung sich in der Praxis erst mit einer gewissen zeitlichen Verzögerung in den Nachlauf hinein fortsetzen. In dem Prädiktionsmodell kann dies berücksichtigt werden, indem die Zeitspanne, innerhalb derer sich eine Windrichtungsänderung bis zu der zweiten Windenergieanlage fortpflanzt, ermittelt wird als Summe aus einer Verzögerungszeit, die aus dem aktuellen Windgeschwindigkeitswert abgeleitet wird, und einer nachlaufbedingten Zusatzzeit, die sich daraus ergibt, dass der Nachlauf einer Änderung der Windrichtung nicht unmittelbar folgt.

Die Zusatzzeit präzise zu bestimmen, ist nicht ganz einfach. Andererseits ist die exakte Vorhersage des zukünftigen Zeitpunkts und des Grades der Überdeckung zwischen dem Nachlauf und dem Rotor der zweiten Windenergieanlage für den Erfolg des Verfahrens entscheidend. Kommt es in der zweiten Windenergieanlage zu einer Vorsteuerung in Erwartung einer kurz bevorstehenden Nachlauf-Belastung und tritt der Nachlauf dann tatsächlich gar nicht auf, so kann die resultierende Belastung der Windenergieanlage höher sein, als wenn auf die Vorsteuerung verzichtet worden wäre. Um solche negativen Auswirkungen des erfindungsgemäßen Verfahrens zu vermeiden, kann die zweite Windenergieanlage mit Belastungssensoren ausgestattet sein, mit denen die tatsächliche Belastung der Windenergieanlage ermittelt wird. Die Belastungssensoren können beispielsweise Dehnungsstreifen in den Rotorblättern umfassen, mit denen eine elastische Verformung des Rotorblatts gemessen werden kann.

Auf diese Weise kann das Prädiktionsmodell in einem automatischen Lernprozess verbessert werden. Führt das aus dem Prädiktionsmodell abgeleitete Steuersignal nicht zu der erwarteten Verminderung der Belastung, so kann eine sprechende Rückmeldung an das Prädiktionsmodell gegeben werden, sodass dieses seine Vorhersagen anpasst. Mit anderen Worten kann das Prädiktionsmodell abhängig von einer gemessenen tatsächlichen Belastung der zweiten Windenergieanlage modifiziert werden. Die Messung der tatsächlichen Belastung kann beispielsweise am zukünftigen Zeitpunkt stattfinden. Die Modifikation des Prädiktionsmodells kann insbesondere die Zeitspanne betreffen, innerhalb derer eine Änderung der Windrichtung sich von der ersten Windenergieanlage bis zu der zweiten Windenergieanlage fortgepflanzt hat.

Sagt das Prädiktionsmodell für einen zukünftigen Zeitpunkt einen Zustand vorher, in dem der Nachlauf der ersten Windenergieanlage den Rotor der zweiten Windenergieanlage teilweise überdeckt, so wird der Pitchwinkel eines Rotorblatts der zweiten Windenergieanlage relativ zu dem Pitchwinkel eines anderen Rotorblatts der zweiten Windenergieanlage verändert. Die Veränderung kann sich auf den Sektor des Rotorumlaufs beziehen, in dem die Abdeckung durch den Nachlauf der ersten Windenergieanlage auftritt. In anderen Abschnitten des Rotorumlaufs kann das Rotorblatt in seine vorherige Position zurückkehren. Dieser Ablauf kann zyklisch wiederholt werden, sodass das Rotorblatt bei Erreichen derselben Winkelposition wieder seinen Pitchwinkel verstellt. Eine entsprechende Steuervorgabe kann auch für die anderen Rotorblätter des Rotors erfolgen, sodass durch eine zyklische Verstellung aller Rotorblätter der asymmetrischen Belastung entgegengewirkt wird.

Eine zyklische Verstellung der Rotorblatt-Pitchwinkel geht regelmäßig einher mit einer verminderten Leistungsaufnahme aus dem Wind. Um die Ertragsverluste gering zu halten, kann die zweite Windenergieanlage so eingerichtet sein, dass die Vorsteuerung auf Basis des Prädiktionsmodells nur dann durchgeführt wird, wenn die gegenwärtige Windgeschwindigkeit oberhalb der Nennwindgeschwindigkeit ist und/oder die zweite Windenergieanlage gegenwärtig bei Nennleistung betrieben wird.

Für das Verfahren kann es von Vorteil sein, wenn für die erste Windenergieanlage und/oder die zweite Windenergieanlage eine Folge von Windrichtungswerten und/oder Windgeschwindigkeitswerten gespeichert wird, die zu unterschiedlichen Zeitpunkten ermittelt wurden. Jeder der Windrichtungswerte/Windgeschwindigkeitswerte kann mit einem Zeitstempel versehen sein, sodass nachvollziehbar ist, zu welchem Zeitpunkt der Wert aufgenommen wurde. Der Zeitraum, über den sich die Folge der gespeicherten Werte erstreckt, kann so bemessen sein, dass sie den Zeitraum umfasst, den ein Windfeld bei der niedrigsten zu betrachtenden Windgeschwindigkeit benötigt, um sich von der ersten Windenergieanlage bis zu der zweiten Windenergieanlage zu bewegen. Für die Speicherung der Daten kann ein Ringspeicher verwendet werden, in dem die Daten über die gewünschte Zeitspanne gespeichert werden und bei dem ältere Daten automatisch durch neu hinzugekommene Daten ersetzt werden.

Diese Windgeschwindigkeitswerte/Windrichtungswerte können zusammen mit dem zugehörigen Zeitstempel gespeichert werden. Außerdem kann zusammen mit dem Zeitstempel eine Information über den aktuellen Betriebsstatus der betreffenden Windenergieanlage gespeichert werden.

Die für die Anwendung des Prädiktionsmodells erforderlichen Rechenschritte können auf einem Zentralrechner des Windparks durchgeführt werden, zu dem die erste Windenergieanlage und die zweite Windenergieanlage gehören. Möglich ist aber auch, dies dezentral mit einem Rechner einer Windenergieanlage zu tun.

Das erfindungsgemäße Verfahren kann mit mehr als zwei Windenergieanlagen durchgeführt werden. Insbesondere kann das Verfahren mit mindestens 10, vorzugsweise mit mindestens 20, weiter vorzugsweise mit mindestens 50 Windenergieanlagen durchgeführt werden. Bei der erfindungsgemäßen Anordnung von Windenergieanlage sind die Windenergieanlagen so räumlich zueinander angeordnet, dass in Abhängigkeit von der Windrichtung jede Windenergieanlage in den Nachlauf mindestens einer anderen Windenergieanlage der Anordnung geraten kann. Die Anordnung von Windenergieanlagen kann als Windpark ausgestaltet sein mit einer zentralen Steuerung, die Vorgaben für den Betrieb einzelner Windenergieanlagen macht.

Wird das Verfahren mit mehr als zwei Windenergieanlagen durchgeführt, so kann das erfindungsgemäße Verfahren den Schritt umfassen, abhängig von der Windrichtung eine Sortierung der Windenergieanlagen vorzunehmen, gemäß der die Windenergieanlagen in Paare von ersten und zweiten Windenergieanlagen sortiert werden, sodass in jedem Paar bei der gegenwärtigen Windrichtung die zweite Windenergieanlage im Nachlauf der ersten Windenergieanlage angeordnet ist. Dabei ist es möglich, dass eine einzelne Windenergieanlage in einem ersten Paar die Rolle der ersten Windenergieanlage und gleichzeitig in einem zweiten Paar die Rolle der zweiten Windenergieanlage einnimmt.

Die Erfindung betrifft außerdem ein Steuerungssystem, mit einer Erfassungseinrichtung zum Aufnehmen eines aktuellen Windwerts einer ersten Windenergieanlage und mit einem Prädiktionsmodell, das dazu ausgelegt ist, unter Verarbeitung des aktuellen Windwerts einen zukünftigen Zeitpunkt vorherzusagen, zu dem eine im Nachlauf der ersten Windenergieanlage angeordnete zweite Windenergieanlage durch den Nachlauf der ersten Windenergieanlage teilweise überdeckt ist, und bei dem das Steuerungssystem in Reaktion auf die Vorhersage ein Steuersignal erzeugt wird, um den Pitchwinkel eines Rotorblatts der zweiten Windenergieanlage relativ zu dem Pitchwinkel eines anderen Rotorblatts der zweiten Windenergieanlage zu verändern. Die Erfindung betrifft außerdem eine Anordnung von Windenergieanlagen, die mit einem solchen Steuerungssystem ausgestattet ist.

In einer bevorzugten Ausführungsform weist das Steuerungssystem mehrere Steuerungsrechenanlagen auf. Die Windprädiktion wird dabei bevorzugt auf einer zentralen Rechenanlage für einen ganzen Windpark durchgeführt. Die jeweilige Windprädiktion für eine Einzelanlagen wird von der zentralen Rechenanlage auf die Steuereinheiten einer Mehrzahl von Einzelanlagen übermittelt. Die jeweiligen Steuereinheiten der Einzelanlagen erzeugen dann aus der übermittelten Windprädiktion die Steuersignale für die Einzelanlagen.

Das Steuerungssystem kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang des erfindungsgemäßen Steuerungssystems beschrieben sind.

Die Erfindung wird nachfolgend unter Bezugnahme auf die beigefügten Zeichnungen anhand vorteilhafter Ausführungsformen beispielhaft beschrieben. Es zeigen:
Fig. 1: eine erfindungsgemäße Anordnung von Windenergieanlagen;
Fig. 2: eine schematische Darstellung eines erfindungsgemäßen Prädiktionsmodells;
Fig. 3: eine teilweise Überdeckung zwischen dem Nachlauf einer ersten Windenergieanlage und dem Rotor einer zweiten Windenergieanlage;
Fig. 4: einen Aspekt des erfindungsgemäßen Prädiktionsmodells;
Fig. 5: eine erfindungsgemäße Anordnung von Windenergieanlagen.

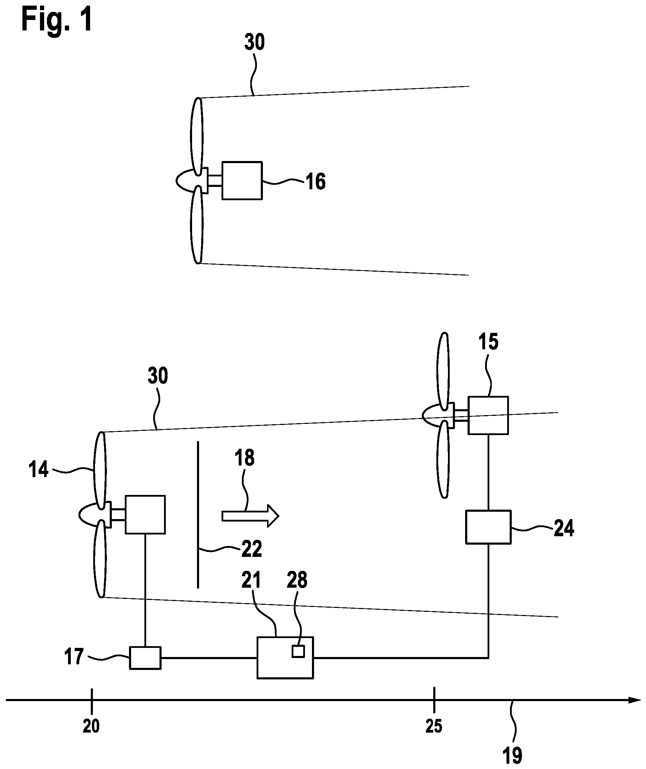

Eine in Fig. 1 gezeigte Anordnung von Windenergieanlagen umfasst eine erste Windenergieanlage 14, eine zweite Windenergieanlage 15 und eine dritte Windenergieanlage 16. Jede Windenergieanlage 14, 15, 16 umfasst einen Rotor, der durch den Wind in Drehung versetzt wird und der einen Generator zur Erzeugung elektrischer Energie antreibt. Jede der Windenergieanlagen 14, 15, 16 umfasst außerdem einen Windschätzer 17, der in Fig. 1 nur am Beispiel der Windenergieanlage 15 dargestellt ist.

Die Windschätzer 17 sind dazu ausgelegt, für jede der Windenergieanlagen 14, 15, 16 einen Schätzwert für die Windgeschwindigkeit und gegebenfalls für die Windrichtung zu ermitteln. Jeder Schätzwert wird abgeleitet von einem oder mehreren Betriebsparametern, die sich in Abhängigkeit von der auf den gesamten Rotor wirkenden Luftmassenstrom ändern. Diese Betriebsparameter können beispielsweise die Drehzahl des Rotors, den Pitchwinkel der Rotorblätter sowie das von dem Rotor aufgebrachte Drehmoment umfassen. Da der Rotor eine große Fläche überstreicht, lassen sich mit dem Windschätzer 17 zuverlässige Werte für die Windgeschwindigkeit und optional auch für die Windrichtung schätzen. Letzteres setzt zusätzliche Messwerte, bevorzugt beispielsweise eine Messung der einzelnen Blattbewegung oder -verformung oder eine Messung der Turmbewegung oder -verformung voraus.

Bei der in Fig. 1 herrschenden Windrichtung 18 ist die zweite Windenergieanlage 15 windabwärts von der ersten Windenergieanlage 14 angeordnet. Der in Windrichtung betrachtete Abstand zwischen der zweiten Windenergieanlage 15 und der ersten Windenergieanlage 14 ist so, dass die zweite Windenergieanlage 15 im Nachlauf 30 der ersten Windenergieanlagen 14 liegt. Bei der Windrichtung 18 sind die Windverhältnisse, die die zweite Windenergieanlage 15 erfährt, also durch den Betrieb der ersten Windenergieanlage 14 beeinflusst.

Die dritte Windenergieanlage 16 ist zwar auch windaufwärts der zweiten Windenergieanlage 15 angeordnet, jedoch ist die dritte Windenergieanlage 16 so weit zur Seite versetzt, dass es keine Überschneidung zwischen dem Nachlauf 30 der dritten Windenergieanlage 16 und dem Rotor der zweiten Windenergieanlage 15 gibt. Zu Beginn des erfindungsgemäßen Verfahrens wird unter Berücksichtigung der aktuellen Windrichtung ermittelt, welche Windenergieanlagen im Nachlauf welcher anderen Windenergieanlagen liegen. Im Ausführungsbeispiel gemäß Fig. 1 ist nur die zweite Windenergieanlage 15 betroffen, die im Nachlauf der ersten Windenergieanlage 14 liegt.

Auf der Zeitachse 19 in Fig. 1 werden zum aktuellen Zeitpunkt 20 Windschätzwerte aller drei Windenergieanlagen 14, 15, 16 ermittelt. Die Windschätzwerte werden zu einem Prädiktionsrechner 21 geleitet, in dem ein Prädiktionsmodell 28 hinterlegt ist. Die Windschätzwerte werden in das Prädiktionsmodell 28 eingespeist, das die Windschätzwerte verarbeitet, um vorherzusagen, wie der Nachlauf 30 der ersten Windenergieanlage 14 sich ausbreiten wird.

Mit dem Prädiktionsmodell 28 werden eine Fortpflanzungsrichtung und eine Fortpflanzungsgeschwindigkeit des Nachlaufs ermittelt. Die Fortpflanzungsrichtung wird in dem Beispiel gemäß Fig. 1 aus der aktuellen Windrichtung 18 abgeleitet, die Fortpflanzungsgeschwindigkeit aus der Windgeschwindigkeit. In Fig. 1 ist dies schematisch dargestellt durch eine Frontlinie 22, die parallel zum Rotor der ersten Windenergieanlage 14 ausgerichtet ist und sich windabwärts bewegt. Als aktuelle Windrichtung wird ein Mittelwert der bei den Windenergieanlagen 14, 16 geschätzten Windrichtung angenommen. Beide Windenergieanlagen 14, 16 sind frei angeströmt, sodass die Windrichtung nicht durch den Nachlauf einer weiter vorne stehenden Windenergieanlage verfälscht ist. In anderen Ausführungsformen der Erfindung kann bei der Ermittlung der aktuellen Windrichtung auch ein bei der zweiten Windenergieanlage 15 gewonnener Schätzwert berücksichtigt werden. Entsprechend kann bei der Ermittlung der aktuellen Windgeschwindigkeit vorgegangen werden.

Eine Steuereinheit 24 der zweiten Windenergieanlage 15 kann bei dem Prädiktionsrechner 21 abfragen, wie der Nachlauf 30 der ersten Windenergieanlage 14 sich zum zukünftigen Zeitpunkt 25 voraussichtlich auf die zweite Windenergieanlage 15 auswirken wird. In dem Ausführungsbeispiel gemäß Fig. 1 gibt es zum zukünftigen Zeitpunkt 25 eine teilweise Überdeckung zwischen dem Nachlauf 30 der ersten Windenergieanlage 14 und dem Rotor der zweiten Windenergieanlage 15.

Als Reaktion auf diese Vorhersage erzeugt die Steuereinheit 24 kurz vor dem Zeitpunkt 25 ein Steuersignal, gemäß dem der Pitchwinkel der Rotorblätter der zweiten Windenergieanlage 15 vor dem Zeitpunkt 25 abhängig von der Winkelposition des jeweiligen Rotorblatts angepasst wird (Vorsteuerung). Insbesondere kann jedes Rotorblatt in dem Winkelbereich des Rotorumlaufs, in dem es eine Überschneidung mit dem Nachlauf 30 der ersten Windenergieanlage 40 gibt, einen anderen Pitchwinkel haben als in anderen Winkelbereichen des Rotorumlaufs. Das Steuersignal der Steuereinheit 24 kann also eine zyklische Veränderung des Pitchwinkels bewirken, wobei die Steuersignale sich nach ihrem vollständigen Rotorumlauf wiederholen können.

Zum aktuellen Zeitpunkt 20 kann außerdem ein aktueller Wert der Turbulenzintensität ermittelt werden. Die Turbulenzintensität kann beispielsweise aus der Standardabweichung der von der ersten Windenergieanlage 14 abgegebenen Leistung ermittelt werden. Der Prädiktionsrechner 21 kann so ausgelegt sein, dass er auch eine Fortpflanzung der Turbulenzintensität ermittelt und eine entsprechende Vorhersage für den zukünftigen Zeitpunkt 25 macht. Die Steuervorgabe der Steuereinheit 24 für die zweite Windenergieanlage 15 kann auch von der für den Zeitpunkt 25 vorhergesagten Turbulenzintensität abhängen.

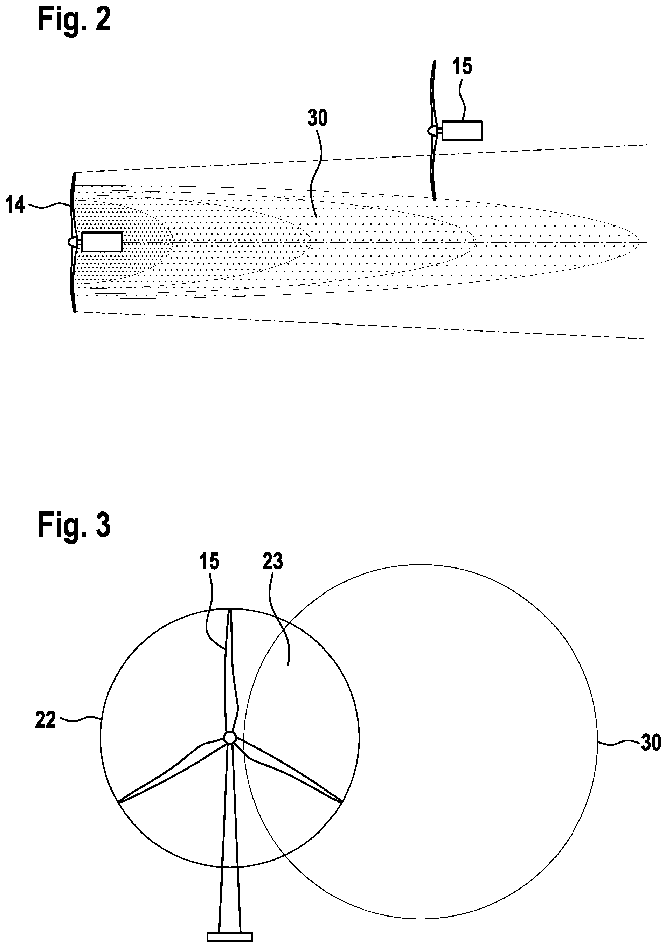

In Fig. 2 sind einige Annahmen veranschaulicht, auf denen das Prädiktionsmodell 28 für den Nachlauf beruht. Geht man von konstanten Windverhältnissen aus, so setzt der Nachlauf 30 sich hinter dem Rotorblatt der ersten Windenergieanlage 14 konzentrisch zur Rotorachse nach hinten fort. Im Bereich der ersten Windenergieanlage 14 entspricht der Querschnitt des Nachlaufs 30 der von dem Rotor überstrichenen Fläche. Mit zunehmendem Abstand von der ersten Windenergieanlage 14 weitet der Nachlauf 30 sich in radialer Richtung leicht auf.

Im Bereich des Nachlaufs 30 ist die Windgeschwindigkeit geringer, als sie es in einem nicht durch die erste Windenergieanlage 14 gestörten Windfeld wäre. Das Windgeschwindigkeitsdefizit ist in dem unmittelbar an den Rotor anschließenden Bereich (dunkel eingefärbt) am stärksten. Mit zunehmendem Abstand von der ersten Windenergieanlage 14 in Richtung windabwärts sowie mit zunehmendem Abstand von der gestrichelt dargestellten zentralen Achse des Nachlaufs 30 wird das Windgeschwindigkeitsdefizit kleiner. Die zweite Windenergieanlage 15 ist in Fig. 2 demnach nur von einem geringfügigen Windgeschwindigkeitsdefizit im Randbereich des Nachlaufs 30 betroffen.

In Fig. 3 ist die mit dem Rotor der zweiten Energieanlage 15 überstrichene Fläche durch einen Kreis 22 gekennzeichnet. Der Nachlauf 30 hat gemäß dem Prädiktionsmodell 28 in der Ebene des Rotors der zweiten Windenergieanlage 15 ebenfalls einen kreisförmigen Querschnitt. Zwischen dem Nachlauf 30 und der von dem Rotor überstrichenen Fläche 22 gibt es im Bereich 23 eine teilweise Überdeckung.

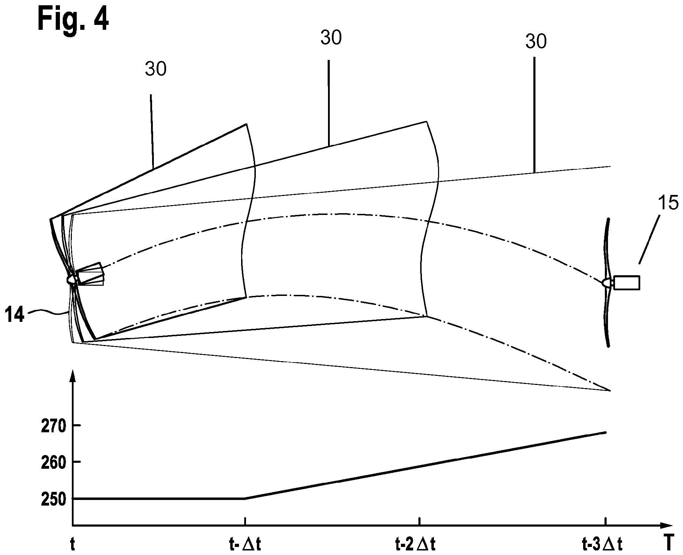

In Fig. 4 ist eine beispielhafte Möglichkeit dargestellt, wie Änderungen der Windrichtung in dem Prädiktionsmodell 28 abgebildet werden können. Dargestellt ist ein Zeitraum zwischen einem aktuellen Zeitpunkt t und einem vergangenen Zeitpunkt t-3Δt. Zu dem vergangenen Zeitpunkt t-3Δt kam der Wind aus 270°, sodass die zweite Windenergieanlage 15 voll im Nachlauf 30 der ersten Windenergieanlage 14 lag. Zwischen t-3Δt und t-2Δt hat die Windrichtung um 10° auf 260° gedreht. Durch den Nachlauf 30 ergibt sich eine Verzögerung, bis diese Änderung der Windrichtung bei der zweiten Windenergieanlage 15 ankommt. Zwischen t-2Δt und t- Δt dreht der Wind um weitere 10° auf 250° und behält diese neue Windrichtung bis zum aktuellen Zeitpunkt t bei. In der Grafik ist die jeweilige Verzögerung angedeutet, bis die geänderte Windrichtung sich in den Nachlauf 30 hinein fortgepflanzt hat.

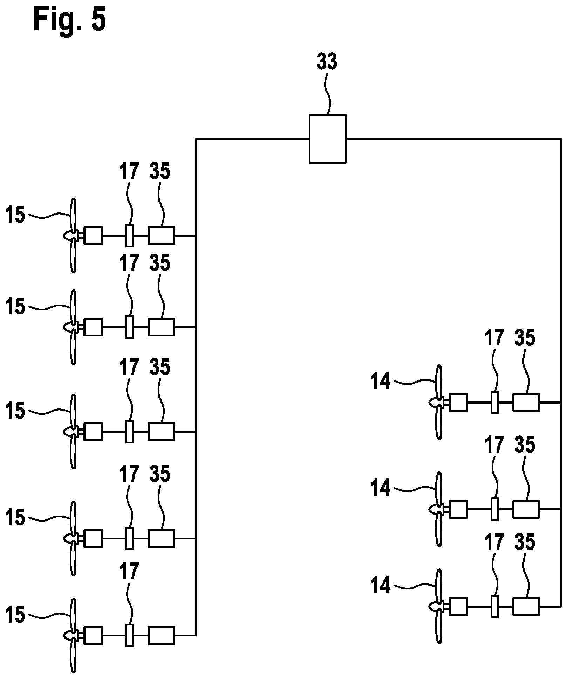

Bei dem in Fig. 5 schematisch dargestellten Windpark sind die windaufwärts angeordneten Windenergieanlagen als erste Windenergieanlagen 14 getrennt dargestellt von den windabwärts angeordneten zweiten Windenergieanlagen 15. Die zugrundeliegende paarweise Zuordnung zwischen ersten Windenergieanlagen 14 und zweiten Windenergieanlagen 15 ist abhängig von der Windrichtung und muss bei jeder Änderung der Windrichtung angepasst werden. Alle Windenergieanlagen 14, 15 sind mit Windschätzern 17 ausgestattet, die Windschätzwerte an einen zentralen Speicher 33 senden. In dem zentralen Speicher 33 werden die Windschätzwerte zusammen mit den geographischen Koordinaten der jeweiligen Windenergieanlage und einem zugehörigen Zeitstempel gespeichert. Ergänzend dazu kann jeweils eine Information über den Betriebszustand der betreffenden Windenergieanlage zu dem betreffenden Zeitpunkt gespeichert werden.

In dem Speicher 33 werden die Daten so lange gespeichert, wie das langsamste zu betrachtende Windfeld benötigt, um sich über die größte Ausdehnung des Windparks zu bewegen. Das langsamste zu betrachtende Windfeld kann beispielsweise eine der Einschaltgeschwindigkeit der Windenergieanlagen entsprechende Geschwindigkeit haben. Der Speicher 33 ist als Ringspeicher ausgebildet, sodass die ältesten Daten dieses Zeitraums jeweils durch neuere Daten ersetzt werden.

Jede Windenergieanlage 14, 15 ist mit einem dezentralen Prädiktionsrechner 35 ausgestattet, der auf die Windschätzwerte in dem Speicher 33 zugreifen kann. Aus der aktuellen Windrichtung ergibt sich für jede windabwärts angeordnete zweite Windenergieanlage 15 ein geographischer Sektor, in dem eine erste Windenergieanlage 14 einen störenden Nachlauf erzeugen könnte. Durch eine Abfrage der in dem Speicher 33 gespeicherten geographischen Koordinaten der ersten Windenergieanlagen 14 kann der Prädiktionsrechner einzelne Windenergieanlagen 14 identifizieren, die potenziell einen störenden Nachlauf verursachen könnten. Indem der Prädiktionsrechner 35 auf die aktuellen Windschätzwerte der betreffenden ersten Windenergieanlage in dem Speicher 33 zugreift, kann der Prädiktionsrechner Vorhersagen, ob in Kürze mit einem störenden Nachlauf 30 für die eigene Windenergieanlage 15 zu rechnen ist. Ist dies der Fall, so kann die Windenergieanlage 15 kurz vor dem Eintreffen des störenden Nachlaufs ein Steuersignal erzeugen, gemäß dem die Rotorblätter zyklisch gepitcht werden.

## Patentansprüche

1. Verfahren zum Betreiben einer ersten Windenergieanlage (14) und einer zweiten Windenergieanlage (15), wobei die zweite Windenergieanlage (15) im Nachlauf (30) der ersten Windenergieanlage (14) angeordnet ist, wobei ein Prädiktionsmodell (28) mit einem aktuellen Windwert der ersten Windenergieanlage (14) gespeist wird, um einen zukünftigen Zeitpunkt (25) vorherzusagen, zu dem die mit dem Rotor der zweiten Windenergieanlage (15) überstrichene Fläche durch den Nachlauf (30) der ersten Windenergieanlage (14) teilweise überdeckt ist, und bei dem die zweite Windenergieanlage (15) auf die Vorhersage reagiert, indem ein Steuersignal erzeugt wird, um den Pitchwinkel eines Rotorblatts der zweiten Windenergieanlage (15) relativ zu dem Pitchwinkel eines anderen Rotorblatts der zweiten Windenergieanlage (15) zu verändern.

2. Verfahren nach Anspruch 1, **dadurch gekennzeichnet, dass** das Steuersignal vor dem zukünftigen Zeitpunkt (25) erzeugt wird.

3. Verfahren nach Anspruch 1 oder 2, **dadurch gekennzeichnet, dass** das Prädiktionsmodell (28) die Annahme umfasst, dass der Nachlauf (30) sich mit zunehmendem Abstand von der ersten Windenergieanlage (14) in radialer Richtung aufweitet, und/oder die Annahme umfasst, dass die Windgeschwindigkeit im Nachlauf (30) vermindert ist verglichen mit einem Windfeld, das nicht durch die erste Windenergieanlage (14) gestört ist.

4. Verfahren nach einem der Ansprüche 1 bis 3, **dadurch gekennzeichnet, dass** das Prädiktionsmodell (28) die Annahme umfasst, dass die Windgeschwindigkeit im Nachlauf (30) eine radiale Verteilung aufweist, gemäß der die Windgeschwindigkeit im Zentrum des Nachlauf (30) geringer ist als in der Peripherie des Nachlaufs (30).

5. Verfahren nach einem der Ansprüche 1 bis 4, **dadurch gekennzeichnet, dass** das Prädiktionsmodell (28) die Annahme umfasst, dass die Turbulenzintensität im Nachlauf (30) erhöht ist verglichen mit einem Windfeld, das nicht durch die erste Windenergieanlage (14) gestört ist.

6. Verfahren nach einem der Ansprüche 1 bis 5, **dadurch gekennzeichnet, dass** der aktuelle Windwert ein geschätzter Windwert ist, der anhand der auf den gesamten Rotor wirkenden Windlast geschätzt ist.

7. Verfahren nach einem der Ansprüche 1 bis 6, **dadurch gekennzeichnet, dass** bei der Prädiktion der Fortpflanzungsrichtung des Nachlaufs (30) ein aktueller Windwert der ersten Windenergieanlage (14) und/oder ein aktueller Windwert der zweiten Windenergieanlage (15) einfließt.

8. Verfahren nach einem der Ansprüche 1 bis 7, **dadurch gekennzeichnet, dass** das Prädiktionsmodell (28) die Windprädiktion in ein geographisches Koordinatensystem abbildet.

9. Verfahren nach Anspruch 8, **dadurch gekennzeichnet, dass** der Standort der ersten Windenergieanlage (14) und/oder der Standort der zweiten Windenergieanlage (15) durch Koordinaten innerhalb des geographischen Koordinatensystems definiert sind.

10. Verfahren nach einem der Ansprüche 1 bis 9, **dadurch gekennzeichnet, dass** der aktuelle Windwert einen Wert für die Turbulenzintensität umfasst, wobei der Wert für die Turbulenzintensität aus einer Standardabweichung der Leistung der ersten Windenergieanlage (14) abgeleitet ist.

11. Verfahren nach einem der Ansprüche 1 bis 10, **dadurch gekennzeichnet, dass** die Zeitspanne, innerhalb derer sich eine Windrichtungsänderung von der ersten Windenergieanlage (14) bis zu der zweiten Windenergieanlage (15) fortpflanzt, in dem Prädiktionsmodell (28) ermittelt wird als Summe aus einer Verzögerungszeit, die aus dem aktuellen Windgeschwindigkeitswert abgeleitet wird, und einer nachlaufbedingten Zusatzzeit.

12. Verfahren nach einem der Ansprüche 1 bis 11, **dadurch gekennzeichnet, dass** die zweite Windenergieanlage (15) mit Belastungssensoren ausgestattet ist, mit denen die tatsächliche Belastung der zweiten Windenergieanlage (15) ermittelt wird.

13. Verfahren nach einem der Ansprüche 1 bis 12, **dadurch gekennzeichnet, dass** das Verfahren nur dann aktiv ist, wenn die gegenwärtige Windgeschwindigkeit oberhalb der Nennwindgeschwindigkeit ist und/oder die zweite Windenergieanlage (15) gegenwärtig bei Nennleistung betrieben wird.

14. Verfahren nach einem der Ansprüche 1 bis 13, **dadurch gekennzeichnet, dass** für die erste Windenergieanlage (14) und/oder für die zweite Windenergieanlage (15) eine Folge von aktuellen Windwerten gespeichert wird, die zu unterschiedlichen Zeitpunkten ermittelt wurden.

15. Steuerungssystem, mit einer Erfassungseinrichtung zum Aufnehmen eines aktuellen Windwerts einer ersten Windenergieanlage (14) und mit einem Prädiktionsmodell (28), das dazu ausgelegt ist, unter Verarbeitung des aktuellen Windwerts einen zukünftigen Zeitpunkt (25) vorherzusagen, zu dem eine im Nachlauf (30) der ersten Windenergieanlage (14) angeordnete zweite Windenergieanlage (15) durch den Nachlauf (30) der ersten Windenergieanlage (14) teilweise überdeckt ist, und bei dem das Steuerungssystem in Reaktion auf die Vorhersage ein Steuersignal erzeugt wird, um den Pitchwinkel eines Rotorblatts der zweiten Windenergieanlage (15) relativ zu dem Pitchwinkel eines anderen Rotorblatts der zweiten Windenergieanlage (15) zu verändern.

## Claims

1. A method for operating a first wind turbine (14) and a second wind turbine (15), the second wind turbine (15) being located in the wake (30) of the first wind turbine (14), a prediction model (28) being fed with a current wind value of the first wind turbine (14), in order to predict a future time point (25) at which the area swept by the rotor of the second wind turbine (15) becomes partially overlapped by the wake (30) of the first wind turbine (14), and in which the second wind turbine (15) reacts to the prediction in that a control signal is generated in order to alter the pitch angle of a rotor blade of the second wind turbine (15) relative to the pitch angle of another rotor blade of the second wind turbine (15).

2. The method as claimed in claim 1, wherein the control signal is generated before the future time point (25).

3. The method as claimed in claim 1 or 2, wherein the prediction model (28) comprises the assumption that the wake (30) widens in the radial direction as the distance from the first wind turbine (14) increases, and/or comprises the assumption that the wind speed in the wake (30) is reduced in comparison with a wind field that is not disturbed by the first wind turbine (14).

4. The method as claimed in any one of claims 1 to 3, wherein the prediction model (28) comprises the assumption that the wind speed in the wake (30) has a radial distribution according to which the wind speed in the center of the wake (30) is less than in the periphery of the wake (30).

5. The method as claimed in any one of claims 1 to 4, wherein the prediction model (28) comprises the assumption that the turbulence intensity in the wake (30) is increased in comparison with a wind field that is not disturbed by the first wind turbine (14).

6. The method as claimed in any one of claims 1 to 5, wherein the current wind value is an estimated wind value, which is estimated on the basis of the wind load acting upon the entire rotor.

7. The method as claimed in any one of claims 1 to 6, wherein a current wind value of the first wind turbine (14) and/or a current wind value of the second wind turbine (15) are/is taken into account in the prediction of the propagation direction of the wake (30).

8. The method as claimed in any one of claims 1 to 7, wherein the prediction model (28) maps the wind prediction into a geographical coordinate system.

9. The method as claimed in claim 8, wherein the location of the first wind turbine (14) and/or the location of the second wind turbine (15) are/is defined by coordinates within the geographical coordinate system.

10. The method as claimed in any one of claims 1 to 9, wherein the current wind value comprises a value for the turbulence intensity, the value for the turbulence intensity being derived from a standard deviation of the output power of the first wind turbine (14).

11. The method as claimed in any one of claims 1 to 10, wherein the time span within which a change in wind direction propagates from the first wind turbine (14) as far as the second wind turbine (15) is determined in the prediction model (28) as the sum of a time lag, which is derived from the current wind speed value, and a wake-related additional time.

12. The method as claimed in any one of claims 1 to 11, wherein the second wind turbine (15) is equipped with load sensors, by which the actual loading of the second wind turbine (15) is determined.

13. The method as claimed in any one of claims 1 to 12, wherein the method is active only when the present wind speed is above the nominal wind speed and/or the second wind turbine (15) is presently being operated at nominal output.

14. The method as claimed in any one of claims 1 to 13, wherein a sequence of current wind values, which have been determined at differing time points, is stored for the first wind turbine (14) and/or for the second wind turbine (15).

15. A control system, having an acquisition means for recording a current wind value of a first wind turbine (14), and having a prediction model (28), which is designed, by processing the current wind value, to predict a future time point (25) at which a second wind turbine (15), located in the wake (30) of the first wind turbine (14), is partially overlapped by the wake (30) of the first wind turbine (14), and in which, in reaction to the prediction, the control system generates a control signal, in order to alter the pitch angle of a rotor blade of the second wind turbine (15) relative to the pitch angle of another rotor blade of the second wind turbine (15).

## Revendications

1. Procédé pour faire fonctionner un premier aérogénérateur (14) et un deuxième aérogénérateur (15), le deuxième aérogénérateur (15) étant disposé dans le sillage (30) du premier aérogénérateur (14), un modèle prédictif (28) étant alimenté par une valeur de vent actuelle du premier aérogénérateur (14) afin de prédire un instant futur (25) auquel la surface balayée par le rotor du deuxième aérogénérateur (15) est partiellement recouverte par le sillage (30) du premier aérogénérateur (14), et avec lequel le deuxième aérogénérateur (15) réagit à la prédiction en ce qu'un signal de commande est généré pour modifier l'angle de pas d'une pale de rotor du deuxième aérogénérateur (15) par rapport à l'angle de pas d'une autre pale de rotor du deuxième aérogénérateur (15) .

2. Procédé selon la revendication 1, **caractérisé en ce que** le signal de commande est généré avant l'instant futur (25).

3. Procédé selon la revendication 1 ou 2, **caractérisé en ce que** le modèle prédictif (28) comprend l'hypothèse selon laquelle le sillage (30) s'élargit dans la direction radiale à mesure que la distance par rapport au premier aérogénérateur (14) augmente et/ou l'hypothèse selon laquelle la vitesse du vent dans le sillage (30) est réduite par rapport à un champ de vent qui n'est pas perturbé par le premier aérogénérateur (14).

4. Procédé selon l'une des revendications 1 à 3, **caractérisé en ce que** le modèle prédictif (28) comprend l'hypothèse que la vitesse du vent dans le sillage (30) présente une distribution radiale selon laquelle la vitesse du vent est plus faible au centre du sillage (30) qu'à la périphérie du sillage (30).

5. Procédé selon l'une des revendications 1 à 4, **caractérisé en ce que** le modèle prédictif (28) comprend l'hypothèse selon laquelle l'intensité de la turbulence dans le sillage (30) est accrue en comparaison d'un champ de vent qui n'est pas perturbé par le premier aérogénérateur (14).

6. Procédé selon l'une des revendications 1 à 5, **caractérisé en ce que** la valeur de vent actuelle est une valeur de vent estimée, laquelle est estimée à l'aide de la charge de vent agissant sur l'ensemble du rotor.

7. Procédé selon l'une des revendications 1 à 6, **caractérisé en ce que** la prédiction de la direction de propagation du sillage (30) prend en compte une valeur de vent actuelle du premier aérogénérateur (14) et/ou une valeur de vent actuelle du deuxième aérogénérateur (15).

8. Procédé selon l'une des revendications 1 à 7, **caractérisé en ce que** le modèle de prédiction (28) reproduit la prédiction de vent dans un système de coordonnées géographiques.

9. Procédé selon la revendication 8, **caractérisé en ce que** l'emplacement du premier aérogénérateur (14) et/ou l'emplacement du deuxième aérogénérateur (15) sont définis par des coordonnées à l'intérieur du système de coordonnées géographiques.

10. Procédé selon l'une des revendications 1 à 9, **caractérisé en ce que** la valeur de vent actuelle comprend une valeur de l'intensité de turbulence, la valeur de l'intensité de turbulence étant dérivée d'un écart type de la puissance du premier aérogénérateur (14).

11. Procédé selon l'une des revendications 1 à 10, **caractérisé en ce que** l'intervalle de temps au sein duquel un changement de direction du vent se propage du premier aérogénérateur (14) au deuxième aérogénérateur (15) est déterminé dans le modèle prédictif (28) en tant que somme d'un temps de retard, qui est dérivé de la valeur actuelle de la vitesse du vent, et d'un temps supplémentaire dû au sillage.

12. Procédé selon l'une des revendications 1 à 11, **caractérisé en ce que** le deuxième aérogénérateur (15) est équipé de capteurs de charge avec lesquels est déterminée la charge réelle du deuxième aérogénérateur (15).

13. Procédé selon l'une des revendications 1 à 12, **caractérisé en ce que** le procédé n'est actif que lorsque la vitesse actuelle du vent est supérieure à la vitesse nominale du vent et/ou lorsque le deuxième aérogénérateur (15) fonctionne actuellement à la puissance nominale.

14. Procédé selon l'une des revendications 1 à 13, **caractérisé en ce qu'**une séquence de valeurs de vent actuelles, qui ont été déterminées à des instants différents, est enregistrée pour le premier aérogénérateur (14) et/ou pour le deuxième aérogénérateur (15) .

15. Système de commande, comprenant un dispositif de détection destiné à enregistrer une valeur de vent actuelle d'un premier aérogénérateur (14) et comprenant un modèle de prédiction (28), qui est conçu pour prédire un instant futur (25) en traitant la valeur de vent actuelle, auquel un deuxième aérogénérateur (15) disposé dans le sillage (30) du premier aérogénérateur (14) est partiellement recouvert par le sillage (30) du premier aérogénérateur (14), et avec lequel le système de commande, en réaction à la prédiction, est généré un signal de commande pour modifier l'angle de pas d'une pale de rotor du deuxième aérogénérateur (15) par rapport à l'angle de pas d'une autre pale de rotor du deuxième aérogénérateur (15).
